# EUROPÄISCHE PATENTSCHRIFT

(11) **EP 2 984 255 B1**
(45) Veröffentlichungstag und Bekanntmachung des Hinweises auf die Patenterteilung: **25.10.2017**
(21) Anmeldenummer: 14718548.2
(22) Anmeldetag: 09.04.2014
(51) Int. Cl.: E04G 21/28, E04G 5/06, E04G 21/24

(54) **FACHWERKTRÄGER FÜR EIN WETTERSCHUTZDACH SOWIE WETTERSCHUTZDACH MIT MEHREREN FACHWERKTRÄGERN**
LATTICE GIRDER FOR A WEATHER PROTECTION ROOF, AND WEATHER PROTECTION ROOF HAVING MULTIPLE LATTICE GIRDERS
POUTRE EN TREILLIS POUR TOIT DE PROTECTION CONTRE LES INTEMPÉRIES AINSI QUE TOIT DE PROTECTION CONTRE LES INTEMPÉRIES COMPRENANT PLUSIEURS POUTRES EN TREILLIS

(30) Priorität: 12.04.2013 DE 102013206583
(43) Veröffentlichungstag der Anmeldung: 17.02.2016
(73) Patentinhaber: Peri GmbH, 89264 Weissenhorn (DE)
(72) Erfinder: MAIER, Melanie, 89264 Weissenhorn (DE); LEDER, Christian, 89346 Bibertal/Bühl (DE); KÜRTH, Jürgen, 89264 Weissenhorn (DE); RUCHTI, Bernd, 89423 Gundelfingen (DE)
(74) Vertreter: Kohler Schmid Möbus Patentanwälte
(86) Internationale Anmeldenummer: PCT/EP2014/057183
(87) Internationale Veröffentlichungsnummer: WO 2014/167015

(56) Entgegenhaltungen:
- EP-A1- 1 035 271
- CA-A1- 2 635 557
- DE-A1- 2 031 168
- DE-A1- 2 145 021
- DE-A1- 2 253 103
- DE-U1- 8 617 398
- JP-A- 2012 188 826
- US-A1- 2002 084 141
- US-A1- 2006 175 130
- XP001477056

## Beschreibung

Die vorliegende Erfindung betrifft einen Fachwerkträger zur Aufnahme einer als Dachhaut dienenden Schutzplane eines Wetterschutzdachs sowie solch ein Wetterschutzdach, dessen Fachwerkträger erfindungsgemäß ausgebildet sind.

Wetterschutzdächer kommen beispielsweise bei Neubauten unter widrigen Witterungsbedingungen oder bei Renovierungsarbeiten "im Bestand" als provisorisches Dach zum Einsatz, um das Eindringen von Niederschlägen und/oder Sonneneinstrahlung in ein bestehendes Gebäude bzw. die Baustelle zu verhindern, wenn beispielsweise das eigene Dach des Gebäudes entfernt wurde oder saniert wird. Solch ein Wetterschutzdach besteht üblicherweise aus einer Vielzahl von Fachwerkträgern, von denen jeder im statischen Sinne eine Scheibe definiert. Die einzelnen Fachwerkträger sind dabei in aller Regel wie die Sparren bei einem Satteldach in Firstrichtung beabstandet zueinander angeordnet und im Bereich des Firsts paarweise miteinander zu Fachwerkbindern verbunden, die das zu schützende Bauwerk überspannen. Durch die Fachwerkträger wird somit gewissermaßen ein Dachstuhl gebildet, der zur Aufnahme einer die Funktion einer Dachhaut wahrnehmenden Schutzplane dient, die bei derartigen Wetterschutzdächern häufig über eine Kederverbindung an benachbarten Fachwerkträgern gesichert wird, indem in die Randbereiche der Schutzplane eingearbeitete Kedern in an den Obergurten der Fachwerkträger montierte Kederschienen eingefädelt werden. Die DE 22 53 103 offenbart einen Fachwerkträger gemäß dem Oberbegriff des Anspruchs 1 und ein Montageverfahren zum Aufbau eines Wetterschutzdaches.

Bei der Montage derartiger Wetterschutzdächer wird üblicherweise so vorgegangen, dass die Fachwerkträger aus einzelnen Fachwerkelementen und/oder -stäben auf dem Erdboden vormontiert und im Firstbereich entsprechend der gewünschten Dachneigung miteinander verbunden werden, welche üblicherweise in der Größenordnung von rund 15° liegt. Obwohl die statische Höhe der einzelnen Fachwerkträger nur etwa 0,7 bis 1,5 m beträgt, kann der Firstpunkt zweier miteinander unter solch einem Neigungswinkel verbundener Fachwerkträger in einigen Metern Höhe liegen, so dass nachfolgende Montagearbeiten wie beispielsweise die Montage der Kederschiene oder das Anschlagen des Kranhakens zum Anheben der Fachwerkträgerkonstruktion aus sicherheitstechnischen Gründen nur mit persönlicher Schutzausrüstung (PSA) durchgeführt werden dürfen, da ein Montagearbeiter zur Ausführung dieser Montagearbeiten den auf dem Erdboden aus zwei Fachwerkträgern errichteten Fachwerkbinder erklettern muss. Auch für alle weiteren Montagearbeiten, die nach dem Anheben der einzelnen Fachwerkbinder auf bzw. über ein zu schützendes Bauwerk durchzuführen sind, wie beispielsweise die Montage von die Fachwerkbinder verbindenden Dachpfetten, das Einziehen der Schutzplane in die Kederschienen oder das Aus- und Einhängen eines Krangehänges im Rahmen der Montage bzw. Demontage des Dachs, müssen sich die Montagearbeiter üblicherweise mit Hilfe der persönlichen Schutzausrüstung an den Fachwerkträgern sichern.
Außerdem kann es vorkommen, dass z.B. zur Anlieferung von Baumaterialien ein Teil des Wetterschutzdaches beispielweise durch Entfernen von Teilen der Schutzplane und Verschieben der Fachverbinder geöffnet werden muss. Auch hierzu ist es erforderlich, dass Arbeiter im Bereich der Fachwerkbinder unterwegs sein und tätig werden müssen, wozu sie sich üblicherweise mit Hilfe der persönlichen Schutzausrüstung sichern müssen.
All dies hat zur Folge, dass die durchzuführenden Arbeiten im Bereich des Wetterschutzdachs viel Zeit in Anspruch nehmen und somit nicht unerhebliche Kosten verursachen, ganz zu schweigen von dem trotz der Verwendung der persönlichen Schutzausrüstung vorhandenen Absturzrisikos.
Der Erfindung liegt daher die Aufgabe zugrunde, die im Bereich eines Wetterschutzdaches durchzuführenden Arbeiten und insbesondere die im Rahmen der Montage- und Demontage eines Wetterschutzdachs anfallenden Rüstarbeiten bei gleichzeitiger Reduzierung des Absturzrisikos zu erleichtern.

Gemäß der Erfindung wird diese Aufgabe mit einem Fachwerkträger für ein Wetterschutzdach gelöst, der die Merkmale des Anspruchs 1 aufweist, sowie mit einem Montageverfahren zum Aufbau eines Wetterschutzdaches mit zumindest einem solchen Fachwerkträger mit den Merkmalen des Anspruchs 8. Sofern hier im Kontext von einem Fachwerkträger die Rede ist, so ist hierunter eine ebene, sich aus einzelnen Fachwerkstäben zusammensetzende Fachwerkkonstruktion zu verstehen, wobei sich die einzelnen Fachwerkstäbe in einer gemeinsamen Ebene erstrecken und im zusammengebauten Zustand im statischen Sinne eine Scheibe in Form des in Rede stehenden Fachwerkträgers bilden. Ist hingegen von einem Fachwerkbinder die Rede, so ist hierunter eine aus zwei Fachwerkträgern zusammengesetzte Fachwerkkonstruktion zu verstehen, deren beide Fachwerkträger an einem gemeinsamen Firstpunkt unter einem definierten Neigungswinkel wie beispielsweise ca. 15° miteinander verbunden sind. Üblicherweise werden je zwei dieser Fachwerkbinder auf dem Erdboden vormontiert und durch zwischen ihnen sich erstreckende Aussteifungselemente wie beispielsweise Pfetten ausgesteift, wodurch ein räumliches Fachwerk bzw. ein räumlicher Fachwerkbinder gebildet wird.
Wie bereits zuvor erläutert wurde, werden die einzelnen Fachwerkträger eines Wetterschutzdachs auf dem Erdboden aus einzelnen Fachwerkelementen und/oder -stäben zusammengesetzt. Im Rahmen dieser Vormontage der einzelnen Fachwerkträger ist es erfindungsgemäß nun also vorgesehen, dass ein Montagesteg zumindest teilweise schon während der Montage der Fachwerkträger auf dem Erdboden an denselben lösbar befestigt wird. Somit können sämtliche Montage- und Demontagearbeiten, die nach dem Verbinden derartiger Fachwerkträger, die mit einem Montagesteg ausgestattetet sind, an einem gemeinsamen Firstpunkt zu einem Fachwerkbinder anfallen, von einem Montagearbeiter im Schutze des Montagestegs durchgeführt werden. Da sich der Montagesteg in Längsrichtung entlang des Fachwerkträgers erstreckt, kann sich der Montagearbeiter zur Durchführung der anfallenden Arbeiten im Schutze des Montagestegs frei entlang des Fachwerkträgers bewegen, so dass keine persönliche Schutzausrüstung benötigt wird, mit der er sich andernfalls beim Klettern entlang der Fachwerkträger sichern müsste.

Da sich die Montagearbeiter somit frei entlang des Montagestegs bewegen können, ohne durch andernfalls benötigte Schutzausrüstungen in ihrer Bewegungsfreieinheit eingeschränkt zu werden, können die Montage- und Demontagearbeiten zügig ausgeführt werden, wodurch sich die für den Montagesteg anfallenden Anschaffungskosten innerhalb kurzer Zeit amortisieren. Erfindungsgemäß beflankt der Montagesteg den Fachwerkträger in Längsrichtung seitlich, wobei die die eigentliche Lauffläche des Montagestegs bildenden Belagelemente auf Trägern aufliegen, welche vorzugsweise in Längsrichtung des Fachwerkträgers beabstandet zueinander an demselben angebracht sind und sich erfindungsgemäß im Wesentlichen senkrecht zu der durch den Fachwerkträger definierten Ebene erstrecken. Der Montagesteg kann sich somit beispielsweise auf Höhe des Untergurts entlang der Längsrichtung des Fachwerkträgers erstrecken, so dass ein den Montagesteg nutzender Montagearbeiter auch bei einer statischen Höhe des Fachwerkträgers von etwa 1,5 m mühelos Montagearbeiten im Bereich des Obergurts wie beispielsweise die Montage der Kederschiene für die Schutzplane des Wetterschutzdachs vornehmen kann. Erfindungsgemäß sind Träger, auf denen die einzelnen Belagelemente aufliegen, als aus der Fachwerkebene im Wesentlichen frei auskragende Kragträger ausgebildet sind, welche beispielsweise über einen biegesteifen Anschluss zur Übertragung der entsprechenden Kragmomente am Untergurt des Fachwerkträgers angeschlossen werden können.
Da hierdurch jedoch verhältnismäßig große Torsionsmomente in den Untergurt eingeleitet werden würden, für die der Untergurt üblicherweise nicht dimensioniert ist, ist es erfindungsgemäß vorgesehen, dass die die Belagelemente aufnehmenden Kragträger an einer lösbar an den Fachwerkstäben des Fachwerkträgers verankerten Tragkonstruktion angeschlossen sind, über die die aus dem Montagesteg herrührenden Querkräfte und Momentenbeanspruchungen auf den Fachwerkträger zuverlässig übertragen werden können. Jede der Tragkonstruktionen weist einen sich in der Fachwerkebene erstreckenden Pfosten auf, welcher vorzugsweise teleskopierbar ist. Das Fußende des in Rede stehenden Pfostens ist dabei durch eine Art Klaue oder zweizinkige Gabel gebildet, über die der Pfosten seitlich eines vertikalen Fachwerkstabs auf dem Untergurt des Fachwerks aufsteht, indem die fußseitigen Klaue den Untergurt übergreift. Am gegenüberliegenden Kopfende weist der Pfosten hingegen beiderseits in der Fachwerkebene liegende Verankerungen ebenfalls beispielsweise in Form von Klauen oder zweizinkigen Gabeln auf, über die die Tragkonstruktion an den benachbarten vertikalen oder diagonalen Fachwerkstäben verankert ist. Dadurch, dass die Pfosten an ihrem Kopfende zwei der in Rede stehenden Verankerungen aufweisen, welche auf gegenüberliegenden Seiten des Pfostens der Tragkonstruktion in der Fachwerkebene liegen, ist es möglich, die Tragkonstruktion in Längsrichtung des Fachwerkträgers an ein und derselben Stelle zu montieren, und zwar unabhängig davon, ob der Montagesteg den Fachwerkträger auf seiner rechten oder linken Seite beflanken soll. Insgesamt ist die Tragkonstruktion also spiegelsymmetrisch aufgebaut, wodurch es möglich ist, ein und dieselbe Tragkonstruktion für den Fachwerkträger rechts oder links beflankende Stege zu verwenden.

Die zuvor erläuterte Pfostenkonstruktion erweist sich darüber hinaus dahingehend als vorteilhaft, dass an dem in Rede stehenden Pfosten im Wesentlichen horizontal verlaufende Riegel lösbar eingehängt werden können, wodurch entlang der dem Fachwerkträger zugewandten Seite des Montagestegs ein Geländerelement gebildet wird, welches eine zusätzliche Absicherung bietet.

Gemäß einer weiteren Ausführungsform ist es vorgesehen, dass der Montagesteg auch entlang der von dem Fachwerkträger abgewandten Seite durch Geländerelemente seitlich begrenzt ist, welche beispielsweise durch biegesteif an den freien Enden der die Belagelemente aufnehmenden Kragträger angeschlossene Pfosten und an diesen Pfosten lösbar eingehängte Riegel gebildet werden. Ein sich auf dem Montagesteg befindlicher Montagearbeiter ist somit auf der einen Seite durch den Fachwerkträger und auf der gegenüberliegenden Seite des Montagestegs durch das dort befindliche Geländer gegen Absturz gesichert, wobei entsprechend den voranstehenden Erläuterungen ein entsprechendes Geländerelement auch entlang der dem Fachwerkträger zugewandten Seite des Montagestegs vorgesehen sein kann, um das Absturzrisiko weiter zu minimieren.

Zwar kann ein Montagearbeiter über den Montagesteg annähernd jede Stelle entlang des jeweiligen Fachwerkträgers eines Wetterschutzdachs erreichen; um jedoch beispielsweise Montagearbeiten an benachbarten Fachwerkbindern eines Wetterschutzdachs im Firstbereich ausführen zu können, muss der Montagearbeiter verhältnismäßig lange Wege zurücklegen, da er hierzu vom Firstpunkt des einen Fachwerkbinders über den Montagesteg zurück zu dessen Auflager auf einem Gerüst oder einer Gebäudemauer gelangen muss, um den Firstpunkt des benachbarten Fachwerkbinders über dessen Montagesteg erreichen zu können. Um die Montagearbeiten weiter vereinfachen und beschleunigen zu können, ist es daher gemäß einer weiteren Ausführungsform vorgesehen, dass zumindest zwei zueinander benachbarte Fachwerkträger über einen von einem Montagearbeiter begehbaren Montagesteg miteinander verbunden sind, welcher ebenfalls vorzugsweise beiderseits durch Geländerelemente begrenzt ist und sich entlang des Firsts des Wetterschutzdachs erstreckt.

Im Folgenden wird die Erfindung nun rein exemplarisch unter Bezugnahme auf die beigefügten Figuren beschrieben, wobei:
- Fig. 1: eine perspektivische Übersichtsdarstellung eines erfindungsgemäßen Wetterschutzdachs ohne Schutzplanen zeigt;
- Fig. 2: eine perspektivische Darstellung zweier gegeneinander ausgesteifter Fachwerkbinder des Wetterschutzdachs der Fig. 1 zeigt;
- Fig. 3: eine vergrößerte Darstellung der Fig. 2 im Bereich des Firsts zeigt;
- Fig. 4: einen ersten Konsolentyp zur Aufnahme des Montagestegs zeigt; und
- Fig. 5: einen zweiten Konsolentyp zur Aufnahme des Montagestegs im Firstbereich zeigt.

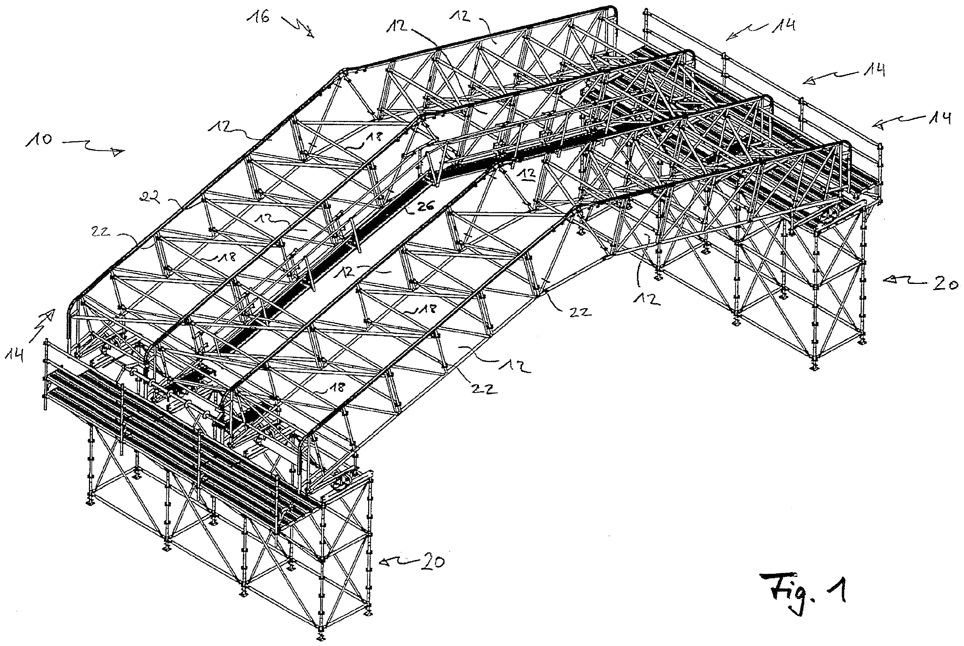

Die Fig. 1 zeigt in perspektivischer Darstellung ein Wetterschutzdach 10 vor der Montage von als Dachhaut dienenden Schutzplanen. Das dargestellte Wetterschutzdach 10 besteht im Wesentlichen aus vier beabstandet zueinander angeordneten und parallel zueinander verlaufenden Fachwerkbindern 14, von denen jeder aus zwei im Bereich des Firsts 16 miteinander verbundenen Fachwerkträgern 12 besteht. In der dargestellten Ausführungsform sind jeweils zwei Fachwerkbinder 14 paarweise durch zwischen ihnen sich erstreckende Aussteifungselemente wie beispielsweise Pfetten 18 ausgesteift, die hierzu in Rosetten 22 eingehängt sind, die sich an den Fachwerkpfosten 24 der Fachwerkträger 12 befinden. Auf diese Weise wird durch je zwei benachbarte Fachwerkbinder 14 jeweils ein räumliches Fachwerk bzw. ein räumlicher Fachwerkbinder gebildet. Die so gebildeten räumlichen Fachwerkbinder werden auf dem Erdboden einschließlich ihrer Schutzplane vormoniert und anschließend mit Hilfe eines Krans über ein zu schützendes Gebäude (nicht dargestellt) gehoben. Die Plane zwischen zwei dieser räumlichen Fachwerkbinder kann jedoch erst dann montiert werden, wenn die in Rede stehenden räumlichen Fachwerkbinder über einem zu schützenden Bauwerk in Position gebracht wurden.

Das Wetterschutzdach 10 ist in der dargestellten Ausführungsform auf einander gegenüberliegenden Seiten auf Traggerüsten 20 gelagert, zwischen denen sich beispielsweise ein von dem Wetterschutzdach 10 vor Umgebungseinflüssen während Sanierungsarbeiten zu schützendes Bauwerk oder eine zu schützende Baustelle befinden kann, das hier nicht dargestellt ist.

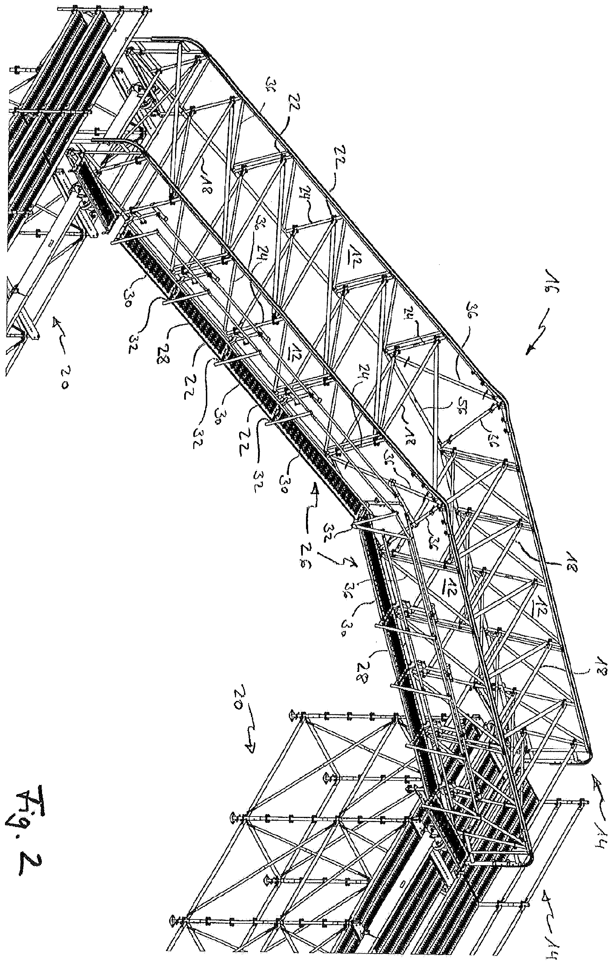

Um einem Montagearbeiter sicheren Zugang zu beliebigen Stellen der Fachwerkträger 12 des Wetterschutzdachs 10 sowohl bereits während der Vormontagearbeiten auf dem Erdboden als auch während des in der Fig. 1 dargestellten Rüstzustands zu ermöglichen, ist es erfindungsgemäß nun vorgesehen, dass an den jeweiligen Fachwerkträger 12 ein von einem Montagearbeiter begehbarer Montagesteg 26 befestigt ist bzw. wird, welcher sich in Längsrichtung des Fachwerkträgers 12 bzw. des sich aus zwei Fachwerkträgern 12 zusammensetzenden Fachwerkbinders 14 entlang des Untergurts 28 erstreckt, wie dies in der Fig. 1 bei dem zweiten Fachwerkbinder 14 von links und in entsprechend vergrößerter Darstellung in der Fig. 2 erkennbar ist.

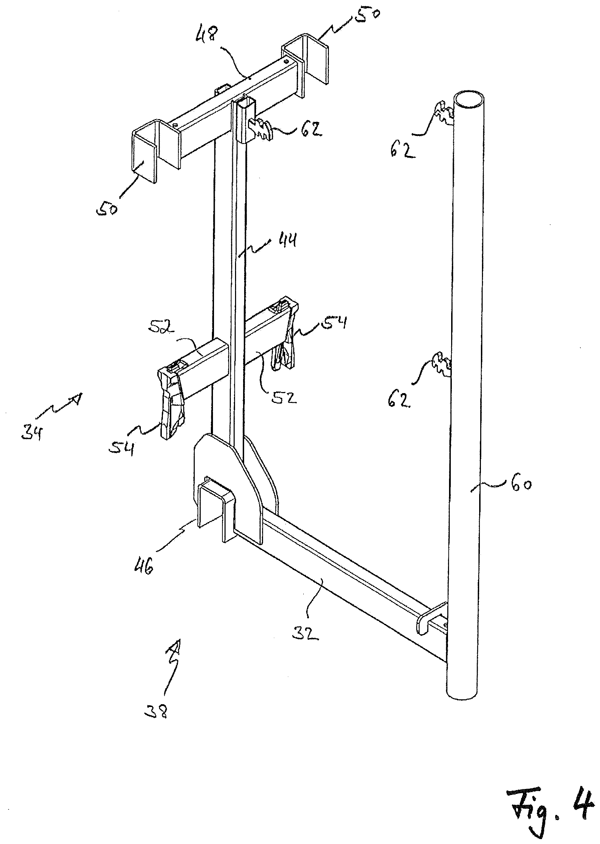

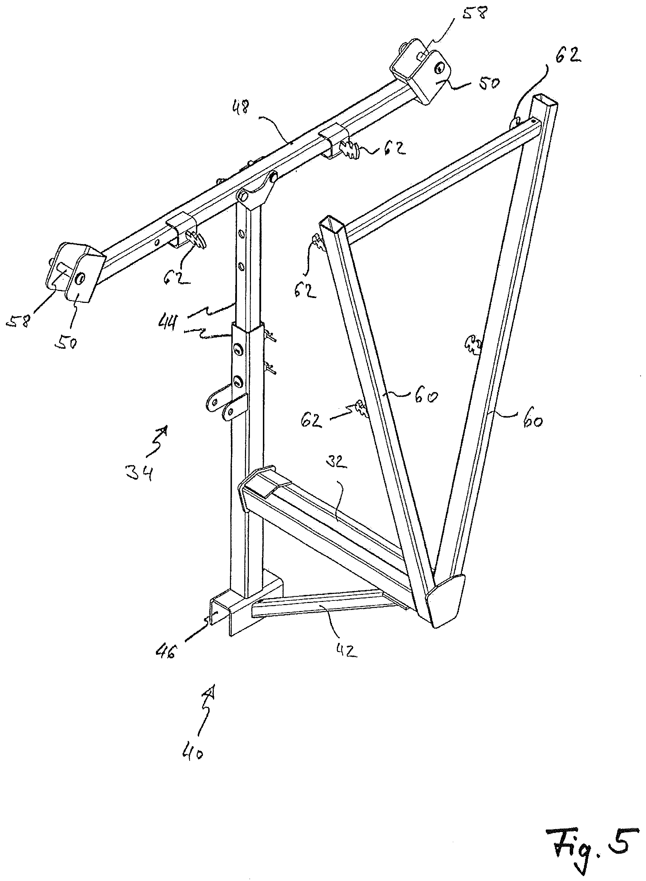

Die Lauffläche des Montagestegs 26 wird dabei durch herkömmliche Gerüstbelagelemente 30 gebildet, welche an ihren gegenüberliegenden Stirnseiten auf Kragträgern 32 aufliegen bzw. mit entsprechenden Haken an diesen Kragträgern 32 eingehängt sind, welche über entsprechende Tragkonstruktionen 34 an den Fachwerkstäben der Fachwerkträger 12 in Form der Fachwerkpfosten 24 oder der Fachwerkdiagonalen 36 sowie des Unterzugs 28 lösbar befestigt sind. Die Konstruktion aus Kragträger 32 und Tragkonstruktion 34 kann dabei gemeinsam als Konsole bezeichnet werden, wobei ein erster Konsolentyp 38 in der Fig. 4 und ein zweiter Konsolentyp 40 in der Fig. 5 dargestellt ist.

Die in der Fig. 5 dargestellte Konsole 40 dient dabei der Anbringung des Montagestegs 26 im Bereich des Firsts 16 des Fachwerkbinders 14, wohingegen die in der Fig. 4 dargestellte Konsole 38 der Anbringung des Montagestegs 26 entlang den übrigen Bereichen des Fachwerkbinders 14 und insbesondere der Anbringung der Tragkonstruktion 34 an den Fachwerkpfosten 24 dient.

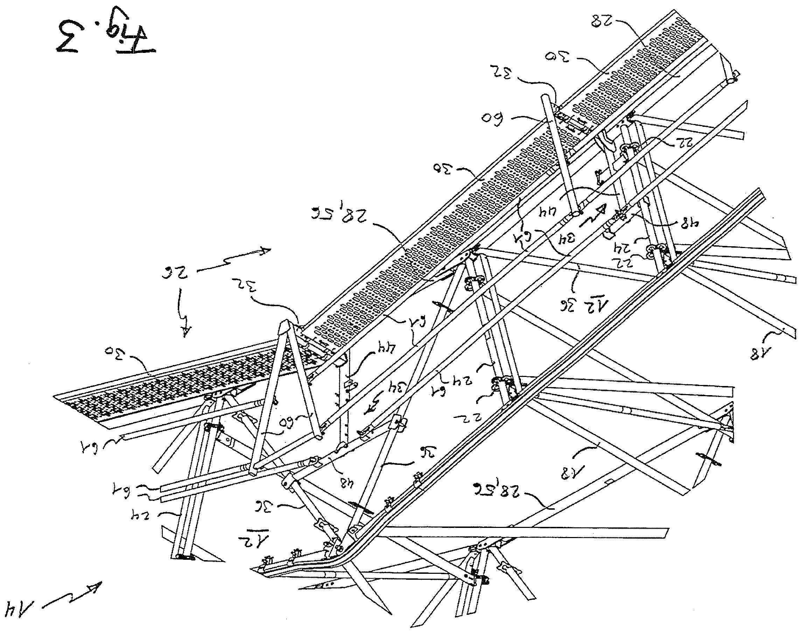

Die beiden in den Fig. 4 und 5 dargestellten Konsolen 38, 40 weisen jeweils einen sich im Wesentlichen horizontal erstreckenden Kragträger 32 auf, wobei der Kragträger 32 der in der Fig. 5 dargestellten Konsole 40 durch eine Druckdiagonale 42 abgestützt ist, so dass es sich streng genommen hier nicht um einen Krag- sondern um einen Einfeldträger handelt, welcher aufgrund seiner sich aus der Fachwerkebene heraus erstreckenden Orientierung hier dennoch als Kragträger bezeichnet wird, zumal auf die unterstützende Diagonale 42 auch verzichtet werden könnte.
Die Kragträger 32 der jeweiligen Konsole 38, 40 sind dabei an ihrem dem frei auskragenden Ende gegenüberliegenden Ende biegesteif an einer Tragkonstruktion 34 angeschlossen, über die der Montagesteg 26 an den Fachwerkstäben 24, 28, 36 eingehängt werden kann.
Jede dieser Tragkonstruktionen 34 weist dabei einen vertikalen Pfosten 44 auf, wobei der Pfosten 44 der Tragkonstruktion 34 der in der Fig. 5 dargestellten Konsole 40 teleskopierbar ausgebildet ist, worauf nachfolgend noch genauer eingegangen wird. Das Fußende des jeweiligen Pfostens 44 wird dabei durch eine Verankerung in Form einer Art Klaue oder zweizinkigen Gabel 46 gebildet, wohingegen am gegenüberliegenden Kopfende des Pfostens 44 ein Querriegel 48 biegesteif angebracht ist, an dessen freien Enden ebenfalls Verankerungen in Form von Klauen oder zweizinkigen Gabeln 50 befestigt sind, wobei sich jedoch die Orientierung dieser klauenartigen Verankerungen 50 bei den beiden Konsolentypen 38, 40 voneinander unterscheiden.
Wie der Zusammenschau der Fig. 3 und 4 entnommen werden kann, wird der Montagesteg 26 im Bereich der Fachwerkpfosten 24 an diesen und dem Untergurt 28 verankert, indem die Konsole 38 mit der klauenartigen Verankerung 46, die den Fußpunkt des Pfostens 44 bildet, auf den Untergurt 28 aufgesetzt wird, und zwar so, dass die fußseitigen Klaue 46 den Untergurt 28 übergreifen und der Fachwerkpfosten 24 von einer der klauenartigen Verankerungen 50 des Querriegels 48 von hinten umgriffen wird. Somit können aus dem Montagesteg 26 herrührende Querkräfte und Momentenbeanspruchungen über die Tragkonstruktion 34 zuverlässig auf den Fachwerkträger 12 übertragen werden, da durch die Hebelwirkung des Pfostens 44 das Kragmoment aus dem Montagesteg 26 als Querkraft in den Fachwerkpfosten 24 eingeleitet wird.

Damit sich die Konsole 38 beispielsweise infolge dynamischer Beanspruchungen nicht unbeabsichtigt wieder lösen kann, weist der Pfosten 44 etwa auf halber Höhe zwei parallel zu dem Querriegel 48 verlaufende Kragarme 52 auf, an deren freien Enden jeweils ein verkeilbarer Zapfen 54 vorgesehen ist, über den die Tragkonstruktion 34 an der Rosette 22 des benachbarten Fachwerkpfostens 24 gesichert werden kann.

Im Bereich des Firsts 16 erfolgt die Anbringung des Montagestegs 26 über die in der Fig. 5 dargestellte Konsole 40, indem diese zunächst fußseitig mit ihrer klauenartigen Verankerung 46 auf die Firstspange 56 aufgesetzt wird, welche als solche ebenfalls einen Teil des Unterzugs 28 des Fachwerkbinders 24 bildet. Anschließend wird dann der teleskopierbare Pfosten 44 nach oben ausgefahren und mittels der am Querriegel 48 befindlichen Verankerungsklauen 50 an den Fachwerkdiagonalen 36 der beiden im Firstbereich miteinander verbundenen Fachwerkträger 12 gesichert, indem ein Sicherungsdorn 58 durch die Klauenabschnitte bzw. Gabelzinken der Verankerung 50 geschoben wird.

Auf den auf diese Weise montierten Konsolen 38, 40 bzw. deren Kragträgern 32 können dann die Belagelemente 30 aufgelegt bzw. eingehängt werden, so dass sämtliche Stellen des Fachwerkbinders 14 über den Montagesteg 26 ohne persönliche Schutzausrüstung erreichbar sind.

Wie den Fig. 4 und 5 des Weiteren entnommen werden kann, sind an den freien Enden der jeweiligen Kragträger 32 Geländerpfosten 60 biegesteif angebracht, welche auf halber Höhe und an ihrem freien Ende Hakelemente 62 zur lösbaren Anbringung von sich im Wesentlichen horizontal erstreckenden Geländerriegeln 61 aufweisen. Derartige Hakelemente 62 können auch an der Tragkonstruktion 34 und insbesondere den Pfosten 44 und/oder den Querriegeln 48 vorgesehen sein, um daran in entsprechender Weise Geländerriegel 61 lösbar einhängen zu können. Auf diese Weise ist der Montagesteg 26 beiderseits durch Geländerelemente 44, 60, 61 seitlich begrenzt, wodurch das Absturzrisiko auf ein Minimum reduziert werden kann.

Da die Anbringung des Montagestegs 26 an den Fachwerkträgern 12 bereits während der Montage derselben auf dem Erdboden erfolgt, können sämtliche Montage- und Demontagearbeiten, die an dem Fachwerkbinder 14 danach ausgeführt werden, von dem Montagesteg 26 aus und im Schutze der Geländerelemente 44, 60, 61 durchgeführt werden, so dass die Montagearbeiter jederzeit zuverlässig gegen Absturz gesichert sind, ohne dass hierzu spezielle Schutzausrüstung benötigt wird.

Obwohl dies in den Figuren nicht dargestellt ist, sei der Vollständigkeit halber an dieser Stelle erwähnt, dass zueinander benachbarte Fachwerkträger 12 des Wetterschutzdachs 10 über einen Montagesteg miteinander verbunden sein können, welcher ebenfalls beiderseits durch ein Geländerelement seitlich begrenzt ist. Die Montagearbeiter können sich somit auf direktem Wege zwischen den einzelnen Fachwerkbindern 14 hin und her bewegen und insbesondere beliebige Stellen im Bereich des Firsts 16 mühelos erreichen, wodurch die für die Montage des Wetterschutzdachs 10 erforderliche Zeit reduziert werden kann.

### Bezugszeichenliste

- 10: Wetterschutzdach
- 12: Fachwerkträger
- 14: Fachwerkbinder
- 16: First
- 18: Pfette
- 20: Traggerüst
- 22: Rosette
- 24: Fachwerkpfosten
- 26: Montagesteg
- 28: Untergurt
- 30: Belagelement
- 32: Kragträger
- 34: Tragkonstruktion
- 36: Fachwerkdiagonale
- 38: Konsole
- 40: Konsole
- 42: Diagonale
- 44: Pfosten von 34
- 46: fußseitige Verankerung von 44
- 48: Querriegel
- 50: kopfseitige Verankerung von 44
- 52: Kragarm
- 54: verkeilbarer Zapfen
- 56: Firstspange
- 58: Sicherungsdorn
- 60: Geländerpfosten
- 61: Geländerriegel
- 62: Hakelement

## Patentansprüche

1. Fachwerkträger (12) für ein Wetterschutzdach (10), wobei an dem Fachwerkträger (12) ein von einem Montagearbeiter begehbarer Montagesteg (26) befestigt ist, **dadurch gekennzeichnet, dass** sich der Montagesteg (26) in Längsrichtung des Fachwerkträgers (12) erstreckt,
wobei der Montagesteg (26) den Fachwerkträger (12) in Längsrichtung seitlich beflankt, wobei sich Träger (32), auf denen Belagelemente (30) aufliegen, im Wesentlichen senkrecht zu der durch den Fachwerkträger (12) definierten Ebene erstrecken, wobei die Träger (32) als aus der Fachwerkträgerebene im Wesentlichen frei auskragende Kragträger (32) ausgebildet sind, die jeweils an einer an Fachwerkstäben (24, 28, 36) des Fachwerkträgers (12) verankerten Tragkonstruktion (34) angeschlossen sind, welche derart ausgebildet ist, dass über sie aus dem Montagesteg (26) herrührende Querkräfte und Momentenbeanspruchungen auf den Fachwerkträger (12) übertragbar sind und
wobei jede der Tragkonstruktionen (34) einen sich in der Fachwerkträgerebene erstreckenden Pfosten (44) aufweist, wobei das Fußende des Pfostens (44) durch eine Art Klaue oder zweizinkige Gabel ausgebildet ist, über die der Pfosten (44) seitlich eines vertikalen Fachwerkstabs (24) auf einem Untergurt (28) des Fachwerkträgers (12) aufsteht, indem die fußseitige Klaue den Untergurt (28) übergreift, wobei der Pfosten (44) am gegenüberliegenden Kopfende beiderseits in der Fachwerkträgerebene liegende Verankerungen (50) aufweist, über die die Tragkonstruktion (34) an benachbarten vertikalen oder diagonalen Fachwerkstäben (24,36) verankert ist.

2. Fachwerkträger nach Anspruch 1,
**dadurch gekennzeichnet, dass** der Montagesteg (26) mehrere von einem Montagearbeiter begehbare Belagelemente (30) aufweist, die auf Trägern (32) aufliegen, welche in Längsrichtung des Fachwerkträgers (12) beabstandet zueinander an dem Fachwerkträger (12) angebracht sind.

3. Fachwerkträger nach zumindest einem der voranstehenden Ansprüche,
**dadurch gekennzeichnet, dass** der Montagesteg (26) zumindest entlang der von dem Fachwerkträger (12) abgewandten Seite, insbesondere auch entlang der dem Fachwerkträger (12) zugewandten Seite, durch Geländerelemente (44, 60, 61) seitlich begrenzt ist.

4. Fachwerkträger nach Anspruch 3,
**dadurch gekennzeichnet, dass**
die entlang der von dem Fachwerkträger (12) abgewandten Seite vorgesehenen Geländerelemente (60, 61) durch biegesteif an den freien Enden der Träger (32) angeschlossene Pfosten (60) und an diesen Pfosten (60) lösbar eingehängte Riegel (61) gebildet werden, und/oder dass
die entlang der dem Fachwerkträger (12) zugewandten Seite vorgesehenen Geländerelemente (44, 61) durch die in der Fachwerkträgerebene verlaufende Pfosten (44) der Tragkonstruktionen (34) und an diesen Pfosten (44) lösbar eingehängte Riegel (61) gebildet werden.

5. Fachwerkträger nach einem der vorhergehenden Ansprüche, **dadurch gekennzeichnet, dass** der Pfosten (44) jeder der Tragkonstruktionen (34) vorzugsweise teleskopierbar ist.

6. Wetterschutzdach (10) mit mehreren Fachwerkträgern (12) gemäß einem der voranstehenden Ansprüchen, wobei insbesondere zumindest zwei zueinander benachbarte Fachwerkträger (12) über den von einem Montagearbeiter begehbaren Montagesteg (26) miteinander verbunden sind, welcher beiderseits durch ein Geländerelement seitlich begrenzt ist.

7. Wetterschutzdach nach Anspruch 6,
**dadurch gekennzeichnet, dass** das Wetterschutzdach (10) als Satteldach ausgebildet ist, wobei der die einzelnen Fachwerkträger (12) verbindende Montagesteg entlang des Firsts (16) des Wetterschutzdachs (10) verläuft.

8. Montageverfahren zum Aufbauen eines Wetterschutzdaches (10) mit zumindest einem Fachwerkträger (12) nach zumindest einem der Ansprüche 1 bis 5, wobei der Montagesteg (26) zumindest teilweise schon während der Montage des Fachwerkträgers (12) auf dem Erdboden an dem Fachwerkträger (12) befestigt wird.

## Claims

1. Truss girder (12) for a roof timbering of a weather protection roof (10), whereby an assembly rail (26) accessible by an installation worker is fitted to the truss girder (12), **characterised in that** the assembly rail (26) extends in a longitudinal direction of the truss girder (12), the assembly rail (26) flanks the truss girder (12) in a longitudinal direction at the side, whereby the support (32) on which surface elements (30) lie extends substantially vertical to the level defined by the truss girder (12)
whereby the supports (32) are designed as cantilevers (32) projecting substantially freely from the truss girder level, each connected with a support structure (34) anchored to framework members (24, 28, 36) of the truss girder (12), which are designed in such a way that they can transfer transverse forces and torque loads originating from the assembly rail (26) to the truss girder (12) and
whereby each of the support structures (34) comprises a post (44) which extends along the framework level
whereby the foot end of the post (44) is formed by a kind of claw or as a two-pronged fork, on which the post (44) stands at the side of a vertical framework member on the lower strap of a framework **in that** the foot-side claw straddles the lower strap,
whereby the post (44) at the opposite end comprises anchors (50) lying on the framework level on both sides, with which the support construction (34) is anchored to adjacent vertical or diagonal framework members (24, 36).

2. Truss girder according to claim 1,
**characterised in that** the assembly rail (26) comprises several surface elements (30) accessible to an installation worker, which lie on supports (32) fitted in a longitudinal direction of the truss girder (12) at distances from each other on the truss girder (12).

3. Truss girder according to at least one of the above claims,
**characterised in that** the assembly rail (26) is delimited at the side, at least along the side facing away from the truss girder (12), in particular also along the side facing the truss girder (12), by railing elements (44, 60, 61).

4. Truss girder according to claim 3, **characterised in that** the railing elements (60, 61) envisaged along the side facing away from the truss girder (12) are formed by posts (60) rigidly connected at the free ends of the supports (32), and **in that** removably hooked-up bolts (61) are formed at these posts (60) and/or **in that** the railing elements (44, 61) envisaged along the side facing the truss girder (12) are formed by posts (44) of the support structures (34) extending along the framework level and removably hooked-up bolts (61) at this post (44).

5. Truss girder according to at least one of the above claims,
**characterised in that** the post (44) of each of the support structures (34) can preferably be telescoped.

6. Weather protection roof (10) with several truss girders (12) according to one of the above claims, whereby in particular at least two adjacent truss girders (12) are connected with each other by the assembly rail (26) accessible to an installation worker, which is delimited on both sides by a railing element.

7. Weather protection roof according to claim 6,
**characterised in that** the weather protection roof (10) is designed as a pitched roof, whereby the assembly rail connecting individual truss girders (12) extends along the ridge (16) of the weather protection roof (10).

8. Installation method for constructing a weather protection roof (10) with at least one truss girder (12) according to at least one of the claims 1 to 5, whereby the assembly rail (26) is fitted to the truss girder (12), at least in part, during the assembly of the truss girder (12) on the ground.

## Revendications

1. Poutre en treillis (12) destinée à un toit (10) de protection contre les intempéries, une passerelle de montage (26), sur laquelle un monteur peut déambuler, étant fixée à ladite poutre en treillis (12),
**caractérisée par le fait que**
la passerelle de montage (26) s'étend dans la direction longitudinale de la poutre en treillis (12),
ladite passerelle de montage (26) flanquant ladite poutre en treillis (12) dans la direction longitudinale, sachant que des supports (32), sur lesquels reposent des éléments de revêtement (30), s'étendent pour l'essentiel perpendiculairement au plan défini par ladite poutre en treillis (12), lesdits supports (32) étant réalisés sous la forme de supports (32) en porte-à-faux qui font, pour l'essentiel, librement saillie au-delà du plan de ladite poutre en treillis et sont rattachés, respectivement, à une structure de support (34) ancrée à des barreaux (24, 28, 36) d'ossature entrecroisée de ladite poutre en treillis (12) et réalisée de façon telle qu'elle permette une transmission, à ladite poutre en treillis (12), de forces transversales et d'impositions de couples émanant de ladite passerelle de montage (26), et chacune des structures de support (34) étant pourvue d'un poteau (44) qui s'étend dans le plan de la poutre en treillis, l'extrémité de piètement dudit poteau (44) se présentant comme une sorte de griffe ou de fourche à deux fourchons par l'intermédiaire de laquelle ledit poteau (44) se dresse sur une membrure inférieure (28) de ladite poutre en treillis (12), sur le côté d'un barreau vertical (24) d'ossature entrecroisée, du fait que ladite griffe de piètement vient coiffer ladite membrure inférieure (28), ledit poteau (44) étant doté, à l'extrémité de tête pointant à l'opposé, de pièces d'ancrage (50) situées de part et d'autre dans ledit plan de la poutre en treillis, et par l'intermédiaire desquelles la structure de support (34) est ancrée à des barreaux verticaux ou diagonaux (24, 36) d'ossature entrecroisée, occupant des emplacements voisins.

2. Poutre en treillis selon la revendication 1,
**caractérisée par le fait que**
la passerelle de montage (26) comporte plusieurs éléments de revêtement (30) sur lesquels un monteur peut déambuler, et qui reposent sur des supports (32) implantés à distance les uns des autres sur la poutre en treillis (12), dans la direction longitudinale de ladite poutre en treillis (12).

3. Poutre en treillis selon au moins l'une des revendications précédentes, **caractérisée par le fait que**
la passerelle de montage (26) est délimitée latéralement par des éléments de garde-corps (44, 60, 61), au moins le long du côté tourné à l'opposé de la poutre en treillis (12) et, en particulier également, le long du côté tourné vers ladite poutre en treillis (12).

4. Poutre en treillis selon la revendication 3,
**caractérisée par le fait que**
les éléments de garde-corps (60, 61), prévus le long du côté tourné à l'opposé de la poutre en treillis (12), sont formés par des colonnettes (60) rattachées aux extrémités libres des supports (32) avec rigidité à la flexion, et par des verrous (61) accrochés à ces colonnettes (60) de manière libérable ;
et/ou **par le fait que**
les éléments de garde-corps (44, 61), prévus le long du côté tourné vers la poutre en treillis (12), sont formés par les poteaux (44) des structures de support (34), s'étendant dans le plan de ladite poutre en treillis, et par des verrous (61) accrochés à ces poteaux (44) de manière libérable.

5. Poutre en treillis selon l'une des revendications précédentes, **caractérisée par le fait que**
le poteau (44) de chacune des structures de support (34) est préférentiellement télescopique.

6. Toit (10) de protection contre les intempéries, muni de plusieurs poutres en treillis (12) conformes à l'une des revendications précédentes, sachant notamment qu'au moins deux poutres en treillis (12), voisines l'une de l'autre, sont reliées l'une à l'autre par l'intermédiaire de la passerelle de montage (26) sur laquelle un monteur peut déambuler et qui est délimitée latéralement, de part et d'autre, par un élément de garde-corps.

7. Toit de protection contre les intempéries selon la revendication 6, **caractérisé par le fait que**
ledit toit (10) de protection contre les intempéries est réalisé sous la forme d'une toiture en pente, la passerelle de montage, reliant les poutres en treillis (12) individuelles, s'étendant le long du faîtage (16) dudit toit (10) de protection contre les intempéries.

8. Procédé de montage dévolu à l'érection d'un toit (10) de protection contre les intempéries, muni d'au moins une poutre en treillis (12) conforme à au moins l'une des revendications 1 à 5, la passerelle de montage (26) étant fixée à la poutre en treillis (12), au moins en partie, dès le stade du montage de ladite poutre en treillis (12) sur le sol.
